# EUROPEAN PATENT APPLICATION

(11) **EP 4 120 217 A1**
(43) Date of publication of application: **18.01.2023**
(21) Application number: 22182886.6
(22) Date of filing: 04.07.2022
(51) Int. Cl.: G08G 1/01, G08G 1/0967, G08G 1/00

(54) **BATCH CONTROL FOR AUTONOMOUS VEHICLES**

(30) Priority: 13.07.2021 US 202117374855
(71) Applicant: Tusimple, Inc., San Diego, CA 92122 (US)
(72) Inventor: TAM, Joyce, San Diego, CA 92122 (US)
(74) Representative: Murgitroyd & Company

(57) **Abstract**

A system for instructing an Autonomous Vehicle (AV) to perform a minimal risk condition maneuver comprises a fleet of AVs and an oversight server. The oversight server receives macro information that applies to a plurality of AVs from the fleet. The oversight server generates a batch command based on the macro information. The batch command is associated with one or more conditions. The oversight server determines whether each AV meets the one or more conditions. If the oversight server determines that the AV meets the one or more conditions, the oversight server sends the batch command to the AV. The batch command includes instructions to perform a minimal risk condition maneuver.

## Description

### TECHNICAL FIELD

The present disclosure relates generally to autonomous vehicles. More particularly, the present disclosure is related to batch control for autonomous vehicles.

### BACKGROUND

One aim of autonomous vehicle technologies is to provide vehicles that can safely navigate towards a destination. In some cases, a fleet of autonomous vehicles in transit may be impacted by traffic, severe weather, and/or other events. For example, a severe weather condition or a traffic incident may be observed on the road ahead of the plurality of autonomous vehicles. Current autonomous vehicle technologies are not configured to instruct a plurality of autonomous vehicles to perform a safety maneuver based on observed information that applies to the plurality of autonomous vehicles.

### SUMMARY

Current autonomous vehicle technologies are not configured to instruct a plurality of autonomous vehicles to perform a safety maneuver based on observed information that applies to the plurality of autonomous vehicles. This disclosure recognizes various problems and previously unmet needs related to communicating commands to autonomous vehicles (AVs). Certain embodiments of this disclosure provide unique technical solutions to technical problems of current autonomous vehicle technologies, including those problems described above to communicate batch commands to a plurality of AVs to perform a Minimal Risk Condition (MRC) maneuver.

In one embodiment, a system for instructing an AV to perform a safety maneuver comprises a fleet of AVs communicatively coupled with an oversight server. The fleet of AVs comprises two or more AVs. The oversight server is configured to wirelessly and remotely communicate with each AV of the fleet.

Each AV in the fleet comprises a vehicle sensor subsystem, a vehicle drive subsystem, a vehicle control subsystem, and an in-vehicle control computer. The vehicle sensor subsystem comprises at least one sensor configured to provide vehicle health data, and a Global Positioning System (GPS) unit to provide vehicle location data. The in-vehicle control computer comprises a network communication subsystem.

The oversight server is configured to receive macro information that applies to a plurality of AVs from among the fleet. For example, the macro information may include traffic data, weather data, and/or any other information related to an area where the plurality of AVs is traveling. In another example, the macro information may include information about the plurality of AVs, such as a defective hardware and/or software module installed on the plurality of AVs, a security vulnerability detected in a particular software application, etc.

The oversight server generates a batch command based at least in part upon the macro information. The batch command is associated with one or more conditions. The one or more conditions may be related to a particular area, a particular time period, a particular software application version, or fault code associated with hardware and/or hardware modules of the plurality of AVs.

For each AV from among the fleet, the oversight server determines whether the AV meets the one or more conditions. In response to determining that the AV meets the one or more conditions, the oversight server sends the batch command to the AV. The batch command includes instructions to perform the minimal risk condition (MRC) maneuver. For example, the MRC maneuver may include causing the AV to pull over to a side of a road on which the AV is traveling. In another example, the MRC maneuver may include causing the AV to slow down. In another example, the MRC maneuver may include causing the AV to reroute and exit a highway on which it is currently traveling.

The disclosed systems provide several practical applications and technical advantages which include: 1) technology that detects macro information that applies to a plurality of AVs, where the macro information may be related to traffic data, weather data, information about the plurality of AVs, such as a defective hardware and/or software module installed on the plurality of AVs, etc.; 2) technology that generates a batch command based on the macro information, where the batch command is associated with one or more conditions related to a particular area, a particular time period, a particular software application version, and/or fault code associated with hardware and/or software modules of the plurality of AVs; 3) technology that provides a user interface to define the one or more conditions; 4) technology that determines whether each AV in the fleet of AVs meets the one or more conditions based on the vehicle location data, vehicle health data, weather data associated with a road traveled by the AV, and traffic data associated with a road traveled by the AV; and 5) technology that sends the batch command to each AV in the fleet of AVs in response to determining that each AV in the fleet meets the one or more conditions.

As such, the systems described in this disclosure may be integrated into a practical application of determining a more efficient, safe, and reliable navigation solution for a fleet of AVs to account for macro information that applies to the fleet of AVs, and issue batch commands to the fleet of AVs in response to determining that each AV in the fleet meets one or more conditions.

Furthermore, the systems described in this disclosure may be integrated into an additional practical application of determining a more efficient, safe, and reliable navigation solution for AVs that are impacted by the macro information, even if the macro information is not observed by the sensors of the AVs. For example, the macro information may be received from a third party, including live news reporting, live traffic reporting, live weather reporting, law enforcement, etc. Accordingly, the disclosed system may improve the current autonomous vehicle technologies.

Furthermore, the disclosed system may be integrated into an additional practical application of improving information security and data loss prevention technologies. For example, by detecting a security vulnerability in a particular software application version installed on a plurality of AVs, and sending a security patch in a batch command, the data stored in memories of in-vehicle control computer systems of the AVs are kept secured from unauthorized access, and thus from data extraction, manipulation, destruction, and exfiltration. This, in turn, provides an additional practical application of improving underlying operations of the in-vehicle control computer systems. For example, by protecting the data stored in the memories of the in-vehicle control computer systems, the processing and memory resources of the AVs can be utilized more efficiently, and the AVs can be navigated with more precision.

Certain embodiments of this disclosure may include some, all, or none of these advantages. These advantages and other features will be more clearly understood from the following detailed description taken in conjunction with the accompanying drawings and claims.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
FIG. 1 illustrates an embodiment of a system configured to communicate batch commands to multiple autonomous vehicles (AVs);
FIG. 2 illustrates an example screenshot of an AV monitoring application;
FIGS. 3 and 4 illustrate example screenshots of an AV monitoring application while an operator is defining conditions to issue batch commands to the multiple AVs;
FIG. 5 illustrates an example flowchart of a method for communicating batch commands to multiple AVs;
FIG. 6 illustrates a block diagram of an example autonomous vehicle configured to implement autonomous driving operations;
FIG. 7 illustrates an example system for providing autonomous driving operations used by the AV of FIG. 6; and
FIG. 8 illustrates a block diagram of an in-vehicle control computer included in the AV of FIG. 6.

### DETAILED DESCRIPTION

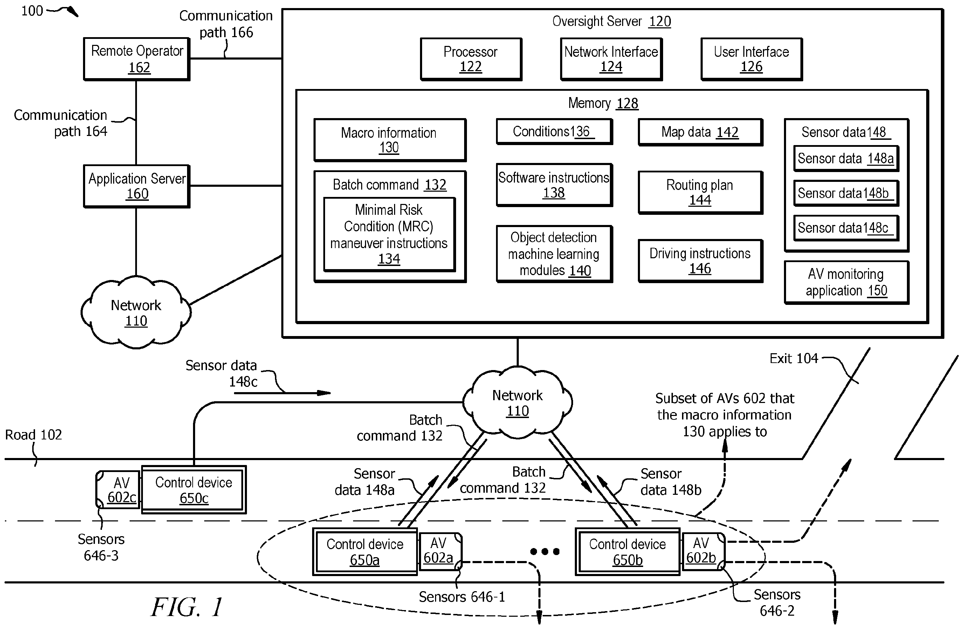

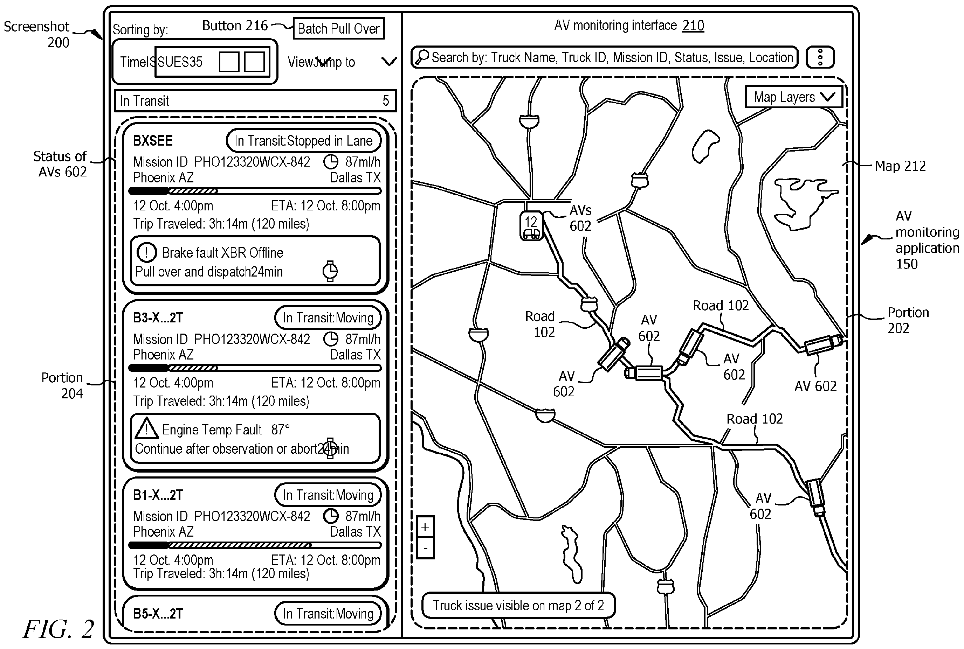

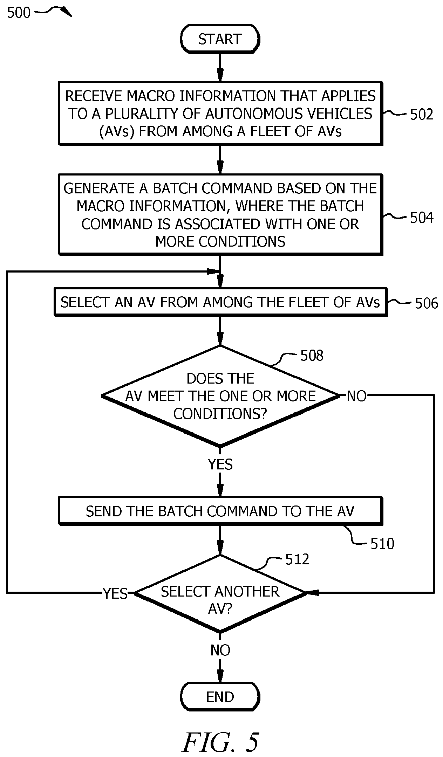

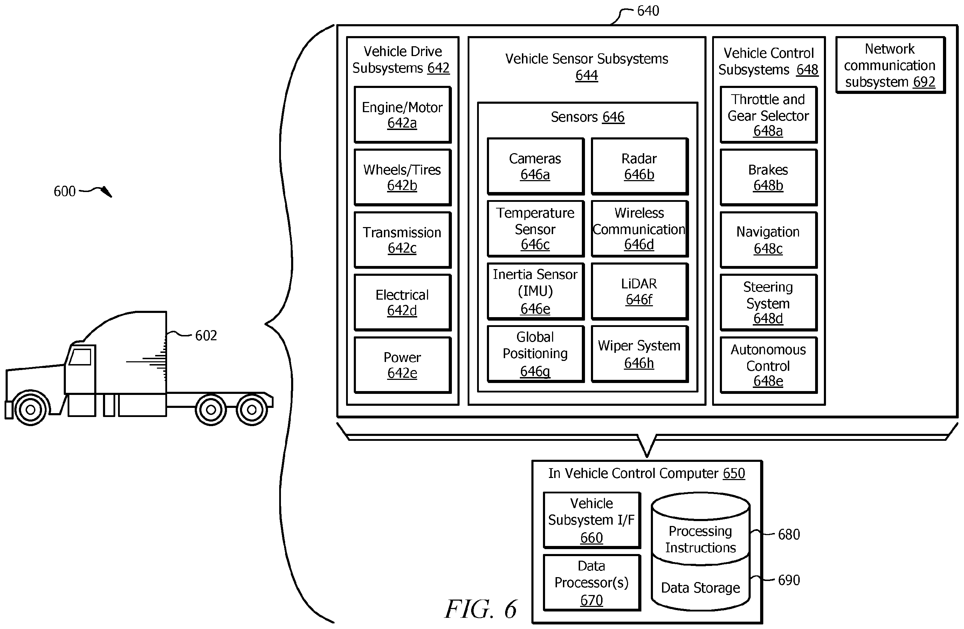

As described above, previous technologies fail to provide efficient, reliable, and safe solutions for communicating batch commands to multiple autonomous vehicles (AVs). This disclosure provides various systems, methods, and devices for achieving one or more of the following objectives: 1) communicating batch commands to multiple AVs; 2) improving the navigation of the multiple AVs; 4) improving tracking of the multiple AVs; 5) improving monitoring of the autonomous operations of the multiple AVs; and 6) providing a safe driving experience for the AVs, other vehicles, and pedestrians. In one embodiment, a system 100 for communicating batch commands to the multiple AVs is described with respect to FIG. 1. In one embodiment, example scenarios to monitor the status of the AVs, define conditions to issue batch commands, and review the progress of the AVs performing instructions in the batch commands are described with respect to FIGS. 2 to 4, respectively. In one embodiment, a method 500 for communicating batch commands to the multiple AVs is described with respect to FIG. 5. In one embodiment, an example AV and its various systems and devices for implementing autonomous driving operations by the AV are described herein with respect to FIGS. 6-8.

### Example system for communicating batch commands to multiple AVs

FIG. 1 illustrates an embodiment of a system 100 for communicating batch commands 132 to multiple AVs 602. FIG. 1 further illustrates a simplified schematic diagram of a road 102 traveled by the multiple AVs 602, including AVs 602a, 602b, and 602c. In one embodiment, system 100 comprises a fleet of AVs 602 and an oversight server 120 (See FIG. 6 for further description of an AV 602). The fleet of AVs 602 comprises two or more AVs 602. The oversight server 120 is configured to wirelessly and remotely communicate with each AV 602. In some embodiments, system 100 further comprises a network 110, application server 160, and a remote operator 162. Network 110 provides communication between components of the system 100. The system 100 may be configured as shown or in any other suitable configuration.

In general, system 100 (at the oversight server 120) receives macro information 130 that applies to a plurality of AVs 602 from among the fleet of AVs 602. The oversight server 120 generates a batch command 132 based on the macro information 130. The batch command 132 comprises instructions to perform a Minimum Risk Condition or Minimal Risk Condition (MRC) maneuver 134. In other words, the batch command 132 may include MRC maneuver instructions 134. For example, the batch command 132 may include MRC maneuver instructions 134 to pull over to an area on a side of a road 102 on which the AV 602 is currently traveling when it is safe to do so. In another example, the batch command 132 may include MRC maneuver instructions 134 to reroute and exit the road 102 when it is safe to do so. In another example, the batch command 132 may include MRC maneuver instructions 134 to slow down the AV 602 in its current lane when it is safe to do so. Other examples of batch commands 132 are described further below. The batch command 132 is associated with one or more conditions 136. Any of the one or more conditions 136 may be location-based, time zone-based, or immediate. Examples of the conditions 136 are described further below. For each autonomous vehicle 602 from among the fleet of AVs 602, the oversight server 120 determines whether the AV 602 meets the one or more conditions 136. In response to determining that the AV 602 meets the one or more conditions 136, the oversight server 120 sends the batch command 132 to the AV 602.

### System components

Network 110 may be any suitable type of wireless and/or wired network, including, but not limited to, all or a portion of the Internet, an Intranet, a private network, a public network, a peer-to-peer network, the public switched telephone network, a cellular network, a local area network (LAN), a metropolitan area network (MAN), a wide area network (WAN), and a satellite network. The network 110 may be configured to support any suitable type of communication protocol as would be appreciated by one of ordinary skill in the art.

Oversight server 120 is generally configured to oversee the operations of the AVs 602. The oversight server 120 comprises a processor 122, a network interface 124, a user interface 126, and a memory 128. The components of the oversight server 120 are operably coupled to each other.

The processor 122 may include one or more processing units that perform various functions as described herein. The memory 128 stores any data and/or instructions used by the processor 122 to perform its functions. For example, the memory 128 stores software instructions 138 that when executed by the processor 122 causes the oversight server 120 to perform one or more functions described herein.

The oversight server 120 is in signal communication with each AV 602 and its components. The oversight server 120 may be further configured to detect objects on and around a road 102 by analyzing the sensor data 148 and/or map data 142. For example, the oversight server 120 may detect objects on and around a road 102 by implementing object detection machine learning modules 140. The object detection machine learning module 140 may be implemented using neural networks and/or machine learning algorithms for detecting objects from images, videos, infrared images, point clouds, radar data, etc. The object detection machine learning module 140 is described in more detail further below.

In one embodiment, the AV 602 may include a semi-truck tractor unit attached to a trailer to transport cargo or freight from one location to another location (see FIG. 6). The AV 602 is navigated by a plurality of components described in detail in FIGS. 6-8. The operation of the AV 602 is described in greater detail in FIG. 6. The corresponding description below includes brief descriptions of certain components of the AV 602. In brief, the AV 602 includes an in-vehicle control computer 650 which is operated to facilitate autonomous driving of the AV 602. In this disclosure, the in-vehicle control computer 650 may be interchangeably referred to as a control device 650.

In the example of FIG. 1, the first AV 602a is associated with the control device 650a and sensors 646-1, the second AV 602b is associated with the control device 650b and sensors 646-2, and the third AV 602c is associated with the control device 650c and sensors 646-3. Each of the control devices 650a, 650b, and 650c is an instance of the control device 650 described in FIG. 6. Each of the sensors 646-1, 646-2, and 6463 is an instance of the sensors 646 described in FIG. 6.

Control device 650 is generally configured to control the operation of the AV 602 and its components. The control device 650 is further configured to determine a pathway in front of the AV 602 that is safe to travel and free of objects/obstacles and navigate the AV 602 to travel in that pathway. This process is described in more detail in FIGS. 6-8. The control device 650 generally includes one or more computing devices in signal communication with other components of the AV 602 (see FIG. 6). The control device 650 receives sensor data 148 from the sensors 646 positioned on the AV 602 to determine a safe pathway to travel. The sensor data 148 includes data captured by the sensors 646. Sensors 646 are configured to capture any object within their detection zones or fields of view, such as landmarks, lane markings, lane boundaries, road boundaries, vehicles, pedestrians, road/traffic signs, among others. The sensors 646 may include cameras, LiDAR sensors, motion sensors, infrared sensors, Radar, positional sensors, and the like. In one embodiment, the sensors 646 may be positioned around the AV 602 to capture the environment surrounding the AV 602.

In the example of FIG. 1, the sensors 646-1 associated with the first AV 602a send sensor data 148a to the oversight server 120, the sensors 646-2 associated with the second AV 602b send sensor data 148b to the oversight server 120, and the sensors 646-3 associated with the third AV 602c send sensor data 148c to the oversight server 120.

The control device 650 is in signal communication with the oversight server 120. The control device 650 is configured to communicate the sensor data 148 to the oversight server 120, for example, via network 110. The control device 650 may communicate the sensor data 148 to the oversight server 120 periodically (e.g., every minute, every few minutes, or any other suitable interval), continuously, and/or upon receiving a request from the oversight server 120 to send sensor data 148. The sensor data 148 may include data describing the environment surrounding the AV 602, such as image feed, video feed, LiDAR data feed, and other data captured from the fields of view of the sensors 646. The sensor data 148 may further include location coordinates of the AV 602. See the corresponding description of FIG. 6 for further description of the control device 650.

### Example macro information

Macro information 130 is generally any information that applies to a plurality of AVs 602. In sone cases, the macro information 130 may be apply to one AV 602. The macro information 130 may include information about an AV 602, a component of an AV 602, the road 102 traveled by an AV 602, environmental data associated with an area where an AV 602 is traveling or heading toward, such as traffic data and weather data, among others.

The oversight server 120 may receive the macro information 130 from a third-party source, including live news reporting, live traffic reporting, live weather reporting, law enforcement, etc. For example, the macro information 130 may include weather data in a particular area (e.g., road 102) in which the plurality of AVs 602 is traveling. The weather data may include weather information of regions or areas where the plurality of AVs 602 is traveling or heading toward. For example, the weather data may be accessed from weather forecasting servers, live weather reporting, etc. In another example, the macro information 130 may include traffic data associated with a particular area (e.g., road 102) in which the plurality of AVs 602 is traveling. The traffic data provides information about conditions of the particular area traveled by the plurality of AVs 602. In another example, the macro information 130 may include a reported traffic incident in a particular area (e.g., road 102) that would impact autonomous driving of the plurality of AVs 602. In another example, the macro information 130 may include road safety regulation data, road closures, construction zones, and/or any other information about a road traveled by the plurality of AVs 602. In another example, the macro information 130 may include a potential security vulnerability that is detected on a particular version of a software application that is installed on control devices 650 of the plurality of AVs 602. In another example, the macro information 130 may indicate a defective software and/or hardware component in an AV 602. In another example, the macro information 130 may include a change in government routing regulations associated with a particular area (e.g., road 102). In another example, the macro information 130 may include a degradation in heath data associated with an AV 602 to a point that the health data is less than a threshold percentage, e.g., less than 70%, 60%, etc. of the optimal performance of the AV 602 and/or less than 70%, 60%, etc. of the optimal functionality of the AV 602. In some cases, a condition 136 may be detected by an AV 602. In such cases, a condition 136 may include determining whether a fault code that potentially degrades health of the AV 602 is detected, determining whether a defect in a software and/or hardware component of the AV 602 is detected.

In one scenario, in the example of FIG. 1, the oversight server 120 receives macro information that could apply to multiple AVs 602. For example, assume that the macro information 130 indicates that a security vulnerability is detected in a particular version of a software application installed in AVs 602.

In response, the oversight server 120 determines whether each of the AVs 602a, 602b, and 602c meets one or more conditions 136. In this example, a condition 136 may be determining whether particular version of the software application is installed in any of the AVs 602a, 602b, and 602c. The oversight server 120 determines whether the particular version of the software application is installed in any of the AVs 602a, 602b, and 602c. The oversight server 120 determines that the condition 136 is met by the first AV 602a and the second AV 602b in response to determining that the particular version of the software application is installed in control devices 650a and 650b associated with the first AV 602a and the second AV 602b, respectively. In this example, the oversight server 120 determines that condition 136 is not met by the third AV 602c because the particular version of the software application is not installed on the control device 650c.

In another scenario, in the example of FIG. 1, assume that the macro information 130 indicates that a road accident has been reported on the road 102 at a particular location. In response, the oversight server 120 determines whether each of the AVs 602a, 602b, and 602c meets one or more conditions 136. In this example, a condition 136 may be determining whether any of the AVs 602a, 602b, and 602c is on the road 102, is heading toward the location of the reported road accident, or whether a distance between any of the AVs 602a, 602b, and 602c and the location of the reported road accident is decreasing. The oversight server 120 determines that the first AV 602a and second AV 602b are heading toward the reported road accident based on their vehicle location data that is included in the sensor data 148a and 148, where the sensor data 148a may indicate a distance between the first AV 602a and the location of the reported road accident is decreasing, and the sensor data 148b may indicate a distance between the second AV 602b and the location of the reported road accident is decreasing. In response, the oversight server 120 determines that the condition 136 is met by the AVs 602a and 602b. In this example, the oversight server 120 determines that the condition 136 is not met to the third AV 602c because vehicle location data included in the sensor data 148c indicates that the third AV 602c is driving away from the reported road accident.

In other scenarios, the oversight server 120 may determine that the one or more conditions 136 apply to any number and combination of AVs 602. In some cases, the macro information 130 may apply to one AV 602. Thus, the oversight server 120 may determine that the one or more conditions 136 apply to the one AV 602, and generate a batch command 132 for the one AV 602.

### Example batch command

Batch command 132 is generally a command message that includes one or more instructions to perform a minimal risk condition (MRC) maneuver 134. The oversight server 120 sends the batch command 132 to a plurality of AVs 602 in response to determining that each AV 602 from among the plurality of AVs 602 meets or fulfills the one or more conditions 136.

In one example, the MRC maneuver 134 may comprise causing an AV 602 to pull over on an area on a side of the road 102 on which the AV 602 is currently traveling. In the example of FIG. 1, the batch command 132 that the oversight server 120 sends to the AV 602a includes instructions to pull over on an area on a side of the road 102.

In another example, the MRC maneuver instruction 134 may comprise causing an AV 602 to exit a highway or roadway on which the AV 602 is currently traveling and cease driving until receiving further instructions. In the example of FIG. 1, the batch command 132 that the oversight server 120 sends to the AV 602b may include instructions to take the exit 104 and cease driving until receiving further instructions, or instructions to pull over on an area on a side of the road 102.

In another example, the MRC maneuver instruction 134 may comprise slowing an AV 602 in a lane in which the AV 602 is currently traveling.

In some cases, a batch command 132 may depend on the current status and location of an AV 602. For example, for a first set of AVs 602 on a highway, a first batch command 132 that may include instructions to exit the highway may be sent, and for a second set of AVs 602 on a city street or road 102, a second batch command 132 that may include instructions to pullover on a side of the road 102.

In response to receiving the batch command 132, an AV 602 may determine when it is safe to carry out the MRC maneuver instruction 134 by analyzing the sensor data 148 and determining that there is an obstacle-free pathway to carry out the MRC maneuver instruction 134.

### Example conditions

Conditions 136 generally include any condition that can be applied to a plurality of AVs 602. For example, the conditions 136 may include determining whether an AV 602 is traveling on a certain type of road 102 comprising a highway, an on/off ramp, a multi-lane road, a single-lane road, or a service road. In another example, the conditions 136 may include determining whether an AV 602 is traveling toward a particular direction on a road 102. In another example, the conditions 136 may include detecting whether a particular type of construction zone is within a threshold distance from an AV 602. In another example, the conditions 136 may include determining whether an AV 602 is traveling on a section of a road 102 designated by particular mile markers. In another example, the conditions 136 may include determining whether an AV 602 is traveling in a geofence that indicates a zone boundary. In another example, the conditions 136 may include determining whether a distance of an AV 602 to a specific location is a particular distance. In another example, the conditions 136 may include determining whether a software application version that is installed on a control device 650 of an AV 602 is a particular software application version. In another example, the conditions 136 may include determining whether an AV 602 is traveling in a specific weather condition. In another example, the conditions 136 may include determining whether an AV 602 is traveling in a specific traffic condition.

The conditions 136 may be defined by a remote operator 162 and/or the oversight server 120. The process of defining the conditions 136 is described in FIGS. 2-4. The conditions 136 may be defined using the AV monitoring application 150. The AV monitoring application 150 may be a software, mobile, and/or web application 150 that is configured to provide an interface to users to monitor the AVs 602, whether or not the AVs 602 are in transit.

The AV monitoring application 150 may be implemented by the processor 122 executing software instructions 138. The remote operator 162 may access the AV monitoring application 150 from the oversight server 120 by using the user interface 126 and/or from the application server 160.

### Defining the conditions from the AV monitoring application

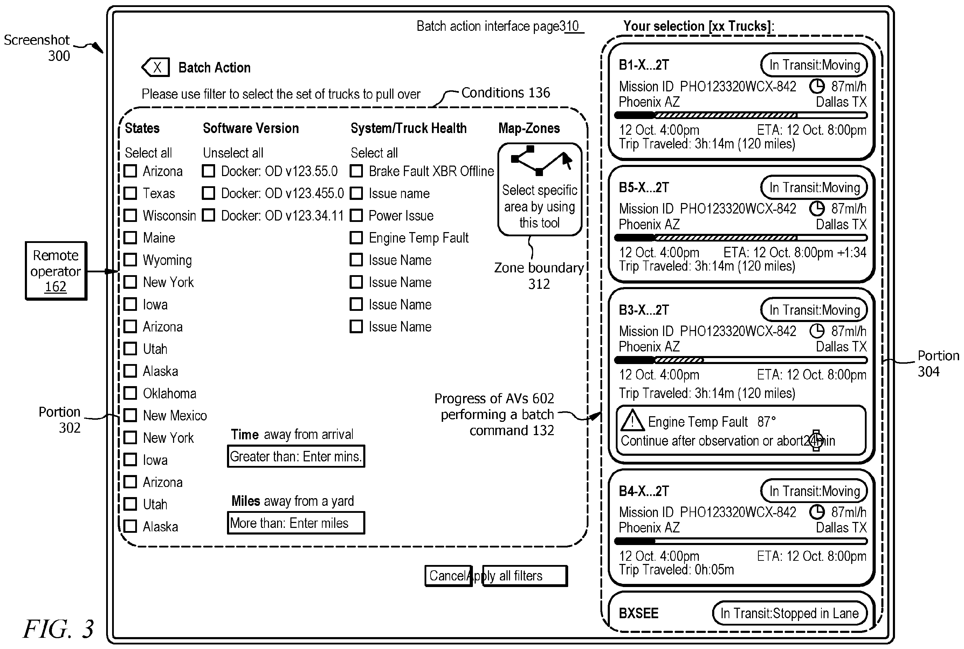

Referring to FIG. 2, a screenshot 200 of an AV monitoring interface 210 associated with the AV monitoring application 150 is illustrated. In the example of FIG. 2, the AV monitoring interface 210 includes a first portion 202 to display a map 212, and a second portion 204 to display status of AVs 214. The AV monitoring interface 210 may also include a button 216 that upon activation opens a batch action interface page 310 that is illustrated in FIG. 3.

Referring to FIG. 3, a screenshot 300 of the batch action interface page 310 is illustrated. In the example of FIG. 3, the batch action interface page 310 includes a first portion 302 that displays filtering options to select and define conditions 136, and a second portion 304 that displays the progress of each AV 602 performing the batch command 132.

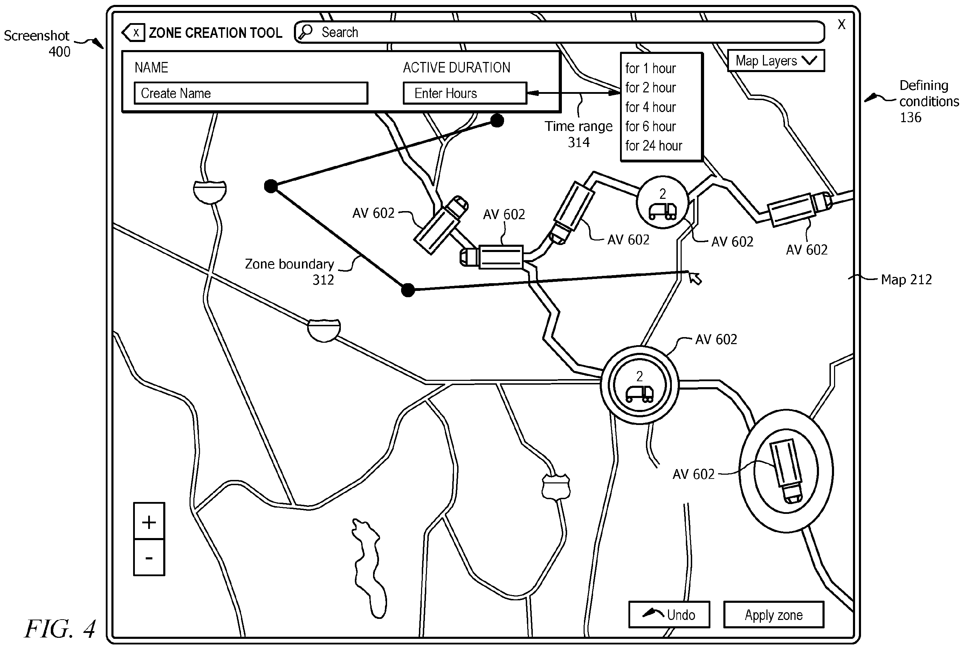

The remote operator 162 may select one or more options to define the conditions 136. For example, the remote operator 162 may define the conditions 136 by selecting a location, a software application version, an indicator of health data of a component of an AV 602, a distance range from a location, a time range, and/or drawing a zone boundary 312 on a map 212 (see FIG. 4). The progress of each AV 602 performing the batch commands 132 is displayed on the second portion 304 on the batch action interface page 310. An example of defining a zone boundary 312 on a map is described in FIG. 4.

Referring to FIG. 4, a screenshot 400 of the AV monitoring application 150 while defining a zone boundary 312 is illustrated. The zone boundary 312 may be defined in any shape, for example, by a cursor on the map 212. The zone boundary 312 may be associated with a geographical geofence. The zone boundary 312 may further be associated with a particular time range 314. For example, a condition 136 may be defined by a zone boundary 312, and the batch command 132 is transmitted to the AVs 602 only during a certain time range 314 when the AVs 602 are in that zone boundary 312.

In another example, a condition 136 may be defined such that determining whether the condition 136 applies to an AV 602 is performed during a scheduled time range 314 for AVs 602 that are traveling within the zone boundary 312. In this example, if the time condition 136 and the location condition 136 are met by AVs 602, the transmission of the batch command 132 to those AVs 602 is executed without direct control from the remote operator 162.

In this manner, the transmission of the batch command 132 may be scheduled when a time condition 136 (e.g., during time range 314) and a location condition 136 (e.g., when an AV 602 is detected to be in the zone boundary 312) are met.

Referring back to FIG. 2, in a particular example, the defined conditions 136 may indicate that between 8 am and 9 am, AVs 602 traveling on a particular road 102 between mile markers ten and fifteen operating eastbound going at average speed of sixty miles per hour (mph) with a particular software application version should perform the MRC maneuver 134, e.g., pull over.

The oversight server 120 may accept the conditions 136 that are selected and defined on the batch action interface page 310.

### Oversight server

Referring back to FIG. 1, aspects of an embodiment of the oversight server 120 are described above, and additional aspects are provided below. The oversight server 120 includes at least one processor 122, at least one network interface 124, at least one user interface 126, and at least one memory 128. The oversight server 120 may be configured as shown or in any other suitable configuration.

In one embodiment, the oversight server 120 may be implemented by a cluster of computing devices that may serve to oversee the operations of the AV 602. For example, the oversight server 120 may be implemented by a plurality of computing devices using distributed computing and/or cloud computing systems. In another example, the oversight server 120 may be implemented by a plurality of computing devices in one or more data centers. As such, in one embodiment, the oversight server 120 may include more processing power than the control device 650. The oversight server 120 is in signal communication with one or more AVs 602 and their components (e.g., the control device 650). In one embodiment, the oversight server 120 is configured to determine a particular routing plan 144 for the AV 602. For example, the oversight server 120 may determine a particular routing plan 144 for an AV 602 that leads to reduced driving time and a safer driving experience for reaching the destination of that AV 602.

In one embodiment, the navigating solutions or routing plans 144 for the AV 602 may be determined from Vehicle-to-Vehicle (V2V) communications, such as one AV 602 with another. In one embodiment, the navigating solutions or routing plans 144 for the AV 602 may be determined from Vehicle-to-Cloud (V2C) communications, such as the AV 602 with the oversight server 120.

In one embodiment, the batch commands 132, navigating solutions, and/or routing plans 144 for the AVs 602 may be implemented by Vehicle-to-Cloud-to-Human (V2C2H), Vehicle-to-Human (V2H), Vehicle-to-Cloud-to-Vehicle (V2C2V), Vehicle-to-Human-to-Vehicle (V2H2V), and/or Cloud-to-Cloud-to-Vehicle (C2C2V) communications, where human intervention is incorporated in determining navigating solutions for the AVs 602. For example, the remote operator 162 may review the macro information 130, batch commands 132, conditions 136, map data 142, sensor data 148, and/or other data from the user interface 126 and confirm, modify, and/or override the conditions 136 and the batch command 132 for the AV 602. The remote operator 162 may add a human perspective in determining the navigation plans of the AVs 602 that the control device 650 and/or the oversight server 120 otherwise do not provide. In some instances, the human perspective is preferable compared to machine's perspective in terms of safety, fuel-saving, etc.

In one embodiment, the batch commands 132 for the AVs 602 may be implemented by any combination of V2V, V2C, V2C2H, V2H, V2C2V, V2H2V, C2C2V communications, among other types of communications.

As illustrated in FIG. 1, the remote operator 162 can access the application server 160 via communication path 164, and similarly, access the oversight server 120 via communication path 166. In one embodiment, the oversight server 120 may send the macro information 130, batch commands 132, conditions 136, sensor data 148, and/or any other data/instructions to an application server 160 to be reviewed by the remote operator 162, e.g., wirelessly through network 110 and/or via wired communication. As such, in one embodiment, the remote operator 162 can remotely access the oversight server 120 via the application server 160.

In one embodiment, the oversight server 120 may receive macro information 130 that applies to a plurality of AVs 602. For example, the oversight server 120 may receive the macro information 130 from a third-party source, such as live news reporting, live weather reporting, live traffic reporting, crowd-sourced traffic data, law enforcement, among others. In one embodiment, the remote operator 162 may review and confirm the received macro information 130, for example by accessing the macro information 130 from the oversight server 120 using the user interfaces 126 and/or from the application server 160. In response to receiving the macro information 130, the oversight server 120 may evaluate whether each AV 602 meets or fulfills one or more conditions 136. In response to determining that an AV 602 from among the plurality of AVs 602 meets or fulfills one or more conditions 136, the oversight server 120 sends the batch command 132 to that AV 602.

Processor 122 comprises one or more processors operably coupled to the memory 128. The processor 122 is any electronic circuitry, including, but not limited to, state machines, one or more central processing unit (CPU) chips, logic units, cores (e.g., a multi-core processor), field-programmable gate array (FPGAs), application-specific integrated circuits (ASICs), or digital signal processors (DSPs). The processor 122 may be a programmable logic device, a microcontroller, a microprocessor, or any suitable combination of the preceding. The processor 122 is communicatively coupled to and in signal communication with the network interface 124, user interface 126, and memory 128. The one or more processors are configured to process data and may be implemented in hardware or software. For example, the processor 122 may be 8-bit, 16-bit, 32-bit, 64-bit or of any other suitable architecture. The processor 122 may include an arithmetic logic unit (ALU) for performing arithmetic and logic operations, processor registers that supply operands to the ALU and store the results of ALU operations, and a control unit that fetches instructions from memory and executes them by directing the coordinated operations of the ALU, registers and other components. The one or more processors are configured to implement various instructions. For example, the one or more processors are configured to execute software instructions 138 to implement the functions disclosed herein, such as some or all of those described with respect to FIGS. 1-8. In some embodiments, the function described herein is implemented using logic units, FPGAs, ASICs, DSPs, or any other suitable hardware or electronic circuitry.

Network interface 124 is configured to enable wired and/or wireless communications. The network interface 124 is configured to communicate data between the oversight server 120 and other network devices, systems, or domain(s). For example, the network interface 124 may comprise a WIFI interface, a local area network (LAN) interface, a wide area network (WAN) interface, a modem, a switch, or a router. The processor 122 is configured to send and receive data using the network interface 124. The network interface 124 may be configured to use any suitable type of communication protocol.

User interfaces 126 may include one or more user interfaces that are configured to interact with users, such as the remote operator 162. The remote operator 162 may access the oversight server 120 via the communication path 164. The user interfaces 126 may include peripherals of the oversight server 120, such as monitors, keyboards, mouse, trackpads, touchpads, etc. The remote operator 162 may use the user interfaces 126 to access the memory 128 to review sensor data 148, macro information 130, batch commands 132, conditions 136, and other data stored in the memory 128.

Memory 128 stores any of the information described in FIGS. 1-8 along with any other data, instructions, logic, rules, or code operable to implement the function(s) described herein when executed by processor 122. For example, the memory 128 may store macro information 130, batch commands 132, conditions 136, software instructions 138, object detection machine learning modules 140, map data 142, routing plan 144, driving instructions 146, sensor data 148, AV monitoring application 150, and/or any other data/instructions. The software instructions 138 include code that when executed by the processor 122 causes the oversight server 120 to perform the functions described herein, such as some or all of those described in FIGS. 1-8. The memory 128 comprises one or more disks, tape drives, or solid-state drives, and may be used as an over-flow data storage device, to store programs when such programs are selected for execution, and to store instructions and data that are read during program execution. The memory 128 may be volatile or non-volatile and may comprise read-only memory (ROM), random-access memory (RAM), ternary content-addressable memory (TCAM), dynamic random-access memory (DRAM), and static random-access memory (SRAM). The memory 128 may include one or more of a local database, cloud database, network-attached storage (NAS), etc.

Object detection machine learning modules 140 may be implemented by the processor 122 executing software instructions 138, and are generally configured to detect objects and obstacles, including the road closures and construction zones from the sensor data 148. The object detection machine learning modules 140 may be implemented using neural networks and/or machine learning algorithms for detecting objects from any data type, such as images, videos, infrared images, point clouds, Radar data, etc.

In one embodiment, the object detection machine learning modules 140 may be implemented using machine learning algorithms, such as Support Vector Machine (SVM), Naive Bayes, Logistic Regression, k-Nearest Neighbors, Decision Trees, or the like. In one embodiment, the object detection machine learning modules 140 may utilize a plurality of neural network layers, convolutional neural network layers, and/or the like, in which weights and biases of these layers are optimized in the training process of the object detection machine learning modules 140. The object detection machine learning modules 140 may be trained by a training dataset which includes samples of data types labeled with one or more objects in each sample. For example, the training dataset may include sample images of objects (e.g., vehicles, lane markings, pedestrians, road signs, obstacles, etc.) labeled with object(s) in each sample image. Similarly, the training dataset may include samples of other data types, such as videos, infrared images, point clouds, Radar data, etc. labeled with object(s) in each sample data. The object detection machine learning modules 140 may be trained, tested, and refined by the training dataset and the sensor data 148. The object detection machine learning modules 140 use the sensor data 148 (which are not labeled with objects) to increase their accuracy of predictions in detecting objects. For example, supervised and/or unsupervised machine learning algorithms may be used to validate the predictions of the object detection machine learning modules 140 in detecting objects in the sensor data 148. Object detection machine learning modules 140 may also be implemented on the autonomous vehicles (AVs) 602, such as on the in-vehicle control computer 650 or autonomous control until 648e (see FIG. 6).

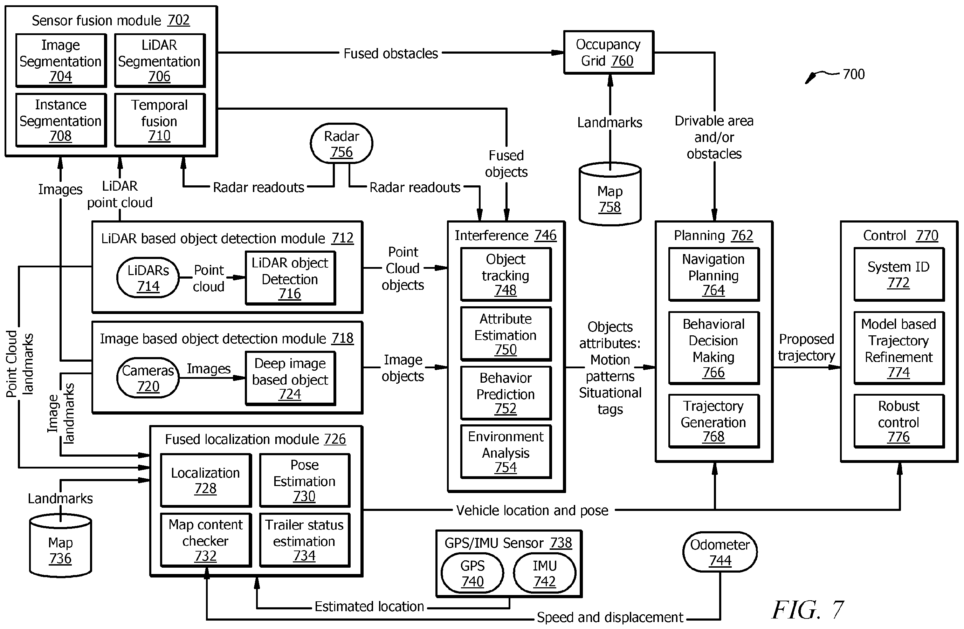

Map data 142 may include a virtual map of a city or an area which includes the road 102. In some examples, the map data 142 may include the map 758 and map database 736 (see FIG. 7 for descriptions of the map 758 and map database 736). The map data 142 may include drivable areas, such as roads 102, paths, highways, and undrivable areas, such as terrain (determined by the occupancy grid module 760, see FIG. 7 for descriptions of the occupancy grid module 760). The map data 142 may specify location coordinates of road signs, lanes, lane markings, lane boundaries, road boundaries, traffic lights, obstacles, etc.

Routing plan 144 is a plan for traveling from a start location (e.g., a first AV launchpad/landing pad) to a destination (e.g., a second AV launchpad/landing pad). For example, the routing plan 144 may specify a combination of one or more streets, roads, and highways in a specific order from the start location to the destination. The routing plan 144 may specify stages, including the first stage (e.g., moving out from the start location), a plurality of intermediate stages (e.g., traveling along particular lanes of one or more particular street/road/highway), and the last stage (e.g., entering the destination). The routing plan 144 may include other information about the route from the start position to the destination, such as road/traffic signs in that routing plan 144, etc.

Driving instructions 146 may be implemented by the planning module 762 (See descriptions of the planning module 762 in FIG. 7.). The driving instructions 146 may include instructions and rules to adapt the autonomous driving of the AV 602 according to the driving rules of each stage of the routing plan 144. For example, the driving instructions 146 may include instructions to stay within the speed range of a road 102 traveled by the AV 602, adapt the speed of the AV 602 with respect to observed changes by the sensors 646, such as speeds of surrounding vehicles, objects within the detection zones of the sensors 646, etc.

Macro information 130 may include traffic data of roads/streets/highways in the map data 142. The oversight server 120 may use the macro information 130 gathered by one or more mapping vehicles, such as drones. The oversight server 120 may use the macro information 130 that is captured from any source, such as crowd-sourced traffic data captured from external sources, e.g., Waze^{®} and Google map^{®}, live traffic reporting, etc.

### Application server

The application server 160 is generally any computing device configured to communicate with other devices, such as other servers (e.g., oversight server 120), AVs 602, databases, etc., via the network 110. The application server 160 is configured to perform functions described herein and interact with the remote operator 162, e.g., via communication path 164 using its user interfaces. Examples of the application server 160 include, but are not limited to, desktop computers, laptop computers, servers, etc. In one example, the application server 160 may act as a presentation layer from which the remote operator 162 accesses the oversight server 120. As such, the oversight server 120 may send sensor data 148, macro information 130, batch commands 132, conditions 136, and/or any other data/instructions to the application server 160, e.g., via the network 110. The remote operator 162, after establishing the communication path 164 with the application server 160, may review the received data and confirm, modify, and/or override the batch commands 132 and/or conditions 136, as described below.

### Operational flow

### Receiving macro information

In one embodiment, the operational flow of the system 100 begins when the oversight server 120 receives the macro information 130 that applies to a plurality of AVs 602. The oversight server 120 may receive the macro information 130 from a third-party source including live news reporting, live traffic reporting, live weather reporting, law enforcement, etc. For example, the oversight server 120 may receive weather data and traffic data associated with an area where the plurality of AVs 602 is traveling that could impact autonomous driving of the plurality of AVs 602.

The oversight server 120 may also receive the macro information 130 from one or more AVs 602. For example, a control device 650 associated with an AV 602 may detect that vehicle health data of the AV 602 indicates that the health percentage of AV 602 (or a component of the AV 602) is less than a threshold percentage, such as less than 70%, 60, etc. Other examples, of the macro information 130 are described above.

### Generating a batch command

The oversight server 120 generates a batch command 132 based on the macro information 130. The oversight server 120 generates the batch command 132 when the processor 122 executes the software instructions 138. The batch command 132 is associated with the one or more conditions 136.

The one or more conditions 136 may be defined by the remote operator 162 using the AV monitoring application 150, similar to that described in FIGS. 2-4.

The oversight server 120 may accept the one or more conditions 136 that are selected on the AV monitoring application 150. A condition 136 from among the one or more conditions 136 may be time-zone based (e.g., time-sensitive or schedule based), such that the condition 136 is scheduled to be verified for each AV 602 at a specific time of day or within a particular range of times, e.g., time range 314 (see FIG. 4). A condition 136 from among the one or more conditions 136 may be location based, such that the condition 136 is verified for each AV 602 when the AV 602 drives into a certain zone boundary, e.g., zone boundary 312 (see FIG. 4). A condition 136 from among the one or more conditions 136 may be immediate (e.g., the status of each AV with respect to the condition is queried immediately), such that the oversight server 120 determines whether an AV 602 meets the condition 136 as the oversight server 120 receives the macro information 130, for example, in a case where the condition 136 is to determine whether a version of a software application installed on AVs 602 is a particular version.

The batch command 132 includes MRC maneuver instructions 134, similar to that described above. The batch command 132 may further include instructions to provide or forward the batch command 132 to one or more other AVs 602.

### Determining whether an AV meets the one or more conditions.

The oversight server 120 may perform the operations described below for each AV 602 from among the fleet of AVs 602. In the example of FIG. 1, the oversight server 120 may perform these operations for AVs 602a, 602b, and 602c.

The oversight server 120 determines whether the AV 602 meets the one or more conditions 136. In this process, the oversight server 120 receives or accepts the sensor data 148 from the AV 602. The sensor data 148 may include vehicle health data and vehicle location data. Each AV 602 may include a vehicle sensor subsystem 644 (see FIG. 6) that comprises at least one sensor 646 that is configured to provide vehicle health data, and a Global Positioning System (GPS) unit 646g (see FIG. 6) that is configured to provide the vehicle location data. Based on the received sensor data 148, the oversight server 120 determines the heath data (e.g., health percentage) and the location coordinates of the AV 602.

The oversight server 120 compares the health data of the AV 602 with the health-related conditions 136. For example, assuming that the health-related condition 136 is whether the health of an AV 602 is less than a threshold (e.g., 70%, 60%, etc.) of the optimal performance of the AV 602 and/or less than 70%, 60%, etc. of the optimal functionality of the AV 602, the oversight server 120 determines whether the AV 602 meets the health-related condition 136 by determining whether the health of an AV 602 is less than the threshold.

The oversight server 120 also compares the location coordinate of the AV 602 with the location-related conditions 136. For example, assuming that the location-related condition 136 is whether the AV 602 is traveling in a particular area, city, zip code, zone boundary 312 (see FIG. 4), the oversight server 120 determines whether the AV 602 meets the location-related condition 136 by determining whether the AV 602 is traveling in the particular area, city, zip code, zone boundary 312 (see FIG. 4) defined in the location-related condition 136.

In one embodiment, the oversight server 120 determines when an AV 602 of the fleet of AVs 602 has fulfilled the one or more conditions 136 based on the vehicle health data of the AV 602, vehicle location data of the AV 602, weather data for an area in which the AV 602 is traveling, and traffic data for the area in which the AV 602 is traveling. In response to determining that the AV 602 meets the conditions 136, the oversight server 120 sends the batch command 132 to the AV 602. The AV 602 accepts, via its control device 650, the batch command 132 from the oversight server 120.

### Example scenarios of different batch commands based on various macro information

In the example where the macro information 130 indicates a security vulnerability in a particular software application version installed on a control device 650, the condition 136 is whether the particular software application version is installed on the AV 602. The batch command 132 may include to download a security patch and/or update the software application.

In the example of detecting a traffic incident, the condition 136 is whether the AV 602 is traveling in the direction of the traffic incident. The batch command 132 may include instructions to pull over, reroute, or slow down the AV 602.

In the example of detecting severe weather, the condition 136 is whether the AV 602 is traveling in the direction of the severe weather. The batch command 132 may include instructions to pull over, reroute, or slow down the AV 602.

In the example of detecting low heath of the AV 602, the condition 136 is whether the health data of the AV 602 indicates that the health indicator of the AV 602 is below a threshold. The batch command 132 may include instructions to pull over or reroute to an AV landing pad where the AV 602 can be diagnosed and repaired by a technician.

In the example of detecting a change in government regulations on a route (e.g., the road 102), the condition 136 is whether the AV 602 is traveling in the direction where the government regulation is changed. The batch command 132 includes instructions to pull over, reroute, or follow the new regulations.

In the example of detecting a defective component (hardware and/or software module), the condition 136 is whether the defective component is installed in the AV 602. The batch command 132 may include instructions to pull over or reroute to an AV landing pad.

The AV 602 executes the batch command 132 by utilizing sensor data 148 and control instructions gathered and generated by its subsystems 640 (see FIG. 6). The AV 602 executes the batch command 132 when the control device 650 associated with the AV 602 determines it is safe to execute the batch command 132.

The control device 650 determines that it is safe to execute the batch command 132 based on analyzing the sensor data 148 that includes locations of objects on and around the road 102. For example, when the control device 650 determines that the pathway to perform the MRC maneuver 134 is obstacle-free based on analyzing the sensor data 148, the AV 602 executes the batch command 132. The AV 602 may wait until the pathway to perform the MRC maneuver 134 is obstacle-free.

For example, the AV 602, based on the sensor data 148, may detect an object on the road 102 at a particular location. The AV 602 determines whether the object prevents or impedes performing the MRC maneuver 134 at a first timestamp. In response to determining that the object prevents or impedes performing the MRC maneuver 134 at the first timestamp, the AV 602 continues driving until the AV 602 passes the objects. Then, the AV 602 performs the MRC maneuver 134 at a second timestamp in response to determining that the pathway to perform the MRC maneuver 134 is obstacle-free. The AV 602 may send a confirmation message to the oversight server 120 that indicates completion of performing the batch command 132. The oversight server 120, in return, receives the confirmation message from the AV 602.

Although, FIG. 1 describes embodiments with respect to a plurality of AVs 602, one of ordinary skill in the art would recognize other embodiments. For example, the macro information 130 may apply to one AV 602. Thus, the oversight server 120 may generate a batch command 132 for that AV 602 based on the macro information 130, and send the batch command 132 to the AV 602, similar to that described above. Thus, systems and methods described herein could apply to systems with one AV 602 and one oversight server 120, (and optionally the remote operator 162).

### Example screenshots of the AV monitoring application

FIG. 2 illustrates the screenshot 200 of the AV monitoring interface 210 associated with the AV monitoring application 150. As described above, the AV monitoring interface 210 includes the first portion 202 to display a map 212, and the second portion 204 to display the status of AVs 214. On the map 212, AVs 602 that are traveling on roads 102 are illustrated.

On the second portion 204, information about each AV 602 is displayed, such as name, vehicle model, current status (e.g., in transit, stopped, etc.), identifier number, mission number, start position, start time, destination, estimated arrival time, trip traveled time, speed, detected fault code (if any), and/or any other information related to the AV 602 and its route.

FIG. 3 illustrates the screenshot 300 of the batch action interface page 310. As described above, the batch action interface page 310 includes the first portion 302 that displays filtering options to select and define conditions 136, and the second portion 304 that displays progress of each AV 602 performing the batch command 132. Aspects of the batch action interface page 310 are described above with respect to FIG. 1.

FIG. 4 illustrates the screenshot 400 of defining zone boundary 312 and time range 314 for one or more conditions 136. The zone boundary 312 may be defined in any shape by a cursor on the map 212. The time range 314 may be any time period, such as from Mondays from 8 am to 9 am, for 2 hours starting from a particular time, etc.

### Example method for communicating batch commands to multiple AVs

FIG. 5 illustrates an example flowchart of a method 500 for communicating batch commands 132 to a plurality of AVs 602. Modifications, additions, or omissions may be made to method 500. Method 500 may include more, fewer, or other steps. For example, steps may be performed in parallel or in any suitable order. While at times discussed as the AV 602, oversight server 120, control device 650, or components of any of thereof performing steps, any suitable system or components of the system may perform one or more steps of the method 500. For example, one or more steps of method 500 may be implemented, at least in part, in the form of software instructions 138 and processing instructions 680, respectively, from FIGS. 1 and 6, stored on non-transitory, tangible, machine-readable media (e.g., memories 128, 690, and 802, respectively, from FIGS. 1, 6, and 8) that when run by one or more processors (e.g., processors 122, 670, 804, respectively, from FIGS. 1, 6, and 8) may cause the one or more processors to perform steps 502-512.

Method 500 begins at step 502 where the oversight server 120 receives macro information 130 that applies to a plurality of AVs 602 from among the fleet of AVs 602. The oversight server 120 may receive the macro information 130 from a third-party source, including live news reporting, live weather reporting, live traffic reporting, crowd-sourced traffic data, law enforcement, etc. For example, the macro information 130 may be related to a particular area and/or a particular time period. In another example, the macro information 130 may be related to a software module and/or a hardware module installed on AVs 602. Examples of macro information 130 are described in FIG. 1.

At step 504, the oversight server 120 generates a batch command 132 based on the macro information 130, where the batch command 132 is associated with one or more conditions 136. The oversight server 120 may generate the batch command 132 when the processor 122 executes the software instructions 138. The batch command 132 may include instructions to perform an MRC maneuver 134. Examples of MRC maneuver 134 are described above with respect to the system shown in FIG. 1. Examples of the one or more conditions 136 are also described above with respect to FIG. 1. The one or more conditions 136 are defined by the remote operator 162 using the AV monitoring application 150, similar to that described in FIGS. 2-4.

At step 506, the oversight server 120 selects an AV 602 from among the fleet of AVs 602. The oversight server 120 iteratively selects an AV 602 until no more AVs 602 are left for evaluation.

At step 508, the oversight server 120 determines whether the AV 602 meets the one or more conditions 136. For example, the oversight server 120 receives sensor data 148 that includes vehicle location data and vehicle health data of the AV 602, and based on the sensor data 148, weather data of the road 102 traveled by the AV 602, and traffic data of the road 102 traveled by the AV 602, the oversight server 120 determines whether the AV 602 meets the one or more conditions 136, similar to that described in FIG. 1. If the oversight server 120 determines that the AV 602 meets the one or more conditions 136, method 500 proceeds to step 510. Otherwise, method 500 proceeds to step 512.

At step 510, the oversight server 120 sends the batch command 132 to the AV 602. For example, the oversight server 120 may send the batch command 132 using V2C communication.

At step 512, the oversight server 120 determines whether to select another AV 602. The oversight server 120 selects another AV 602 if it determines at least one AV 602 is left for evaluation. If the oversight server 120 determines to select another AV 602, method 500 returns to step 506. Otherwise, method 500 terminates.

### Example AV and its operation

FIG. 6 shows a block diagram of an example vehicle ecosystem 600 in which autonomous driving operations can be determined. As shown in FIG. 6, the AV 602 may be a semi-trailer truck. The vehicle ecosystem 600 includes several systems and components that can generate and/or deliver one or more sources of information/data and related services to the in-vehicle control computer 650 that may be located in an AV 602. The in-vehicle control computer 650 can be in data communication with a plurality of vehicle subsystems 640, all of which can be resident in the AV 602. A vehicle subsystem interface 660 is provided to facilitate data communication between the in-vehicle control computer 650 and the plurality of vehicle subsystems 640. In some embodiments, the vehicle subsystem interface 660 can include a controller area network (CAN) controller to communicate with devices in the vehicle subsystems 640.

The AV 602 may include various vehicle subsystems that support of the operation of AV 602. The vehicle subsystems 640 may include a vehicle drive subsystem 642, a vehicle sensor subsystem 644, a vehicle control subsystem 648, and/or network communication subsystem 692. The components or devices of the vehicle drive subsystem 642, the vehicle sensor subsystem 644, and the vehicle control subsystem 648 shown in FIG. 6 are examples. The AV 602 may be configured as shown or any other configurations.

The vehicle drive subsystem 642 may include components operable to provide powered motion for the AV 602. In an example embodiment, the vehicle drive subsystem 642 may include an engine/motor 642a, wheels/tires 642b, a transmission 642c, an electrical subsystem 642d, and a power source 642e.

The vehicle sensor subsystem 644 may include a number of sensors 646 configured to sense information about an environment or condition of the AV 602. The vehicle sensor subsystem 644 may include one or more cameras 646a or image capture devices, a Radar unit 646b, one or more temperature sensors 646c, a wireless communication unit 646d (e.g., a cellular communication transceiver), an inertial measurement unit (IMU) 646e, a laser range finder/LiDAR unit 646f, a Global Positioning System (GPS) transceiver 646g, and/or a wiper control system 646h. The vehicle sensor subsystem 644 may also include sensors configured to monitor internal systems of the AV 602 (e.g., an O₂ monitor, a fuel gauge, an engine oil temperature, etc.).

The IMU 646e may include any combination of sensors (e.g., accelerometers and gyroscopes) configured to sense position and orientation changes of the AV 602 based on inertial acceleration. The GPS transceiver 646g may be any sensor configured to estimate a geographic location of the AV 602. For this purpose, the GPS transceiver 646g may include a receiver/transmitter operable to provide information regarding the position of the AV 602 with respect to the Earth. The Radar unit 646b may represent a system that utilizes radio signals to sense objects within the local environment of the AV 602. In some embodiments, in addition to sensing the objects, the Radar unit 646b may additionally be configured to sense the speed and the heading of the objects proximate to the AV 602. The laser range finder or LiDAR unit 646f may be any sensor configured to sense objects in the environment in which the AV 602 is located using lasers. The cameras 646a may include one or more devices configured to capture a plurality of images of the environment of the AV 602. The cameras 646a may be still image cameras or motion video cameras.

The vehicle control subsystem 648 may be configured to control the operation of the AV 602 and its components. Accordingly, the vehicle control subsystem 648 may include various elements such as a throttle and gear selector 648a, a brake unit 648b, a navigation unit 648c, a steering system 648d, and/or an autonomous control unit 648e. The throttle and gear selector 648a may be configured to control, for instance, the operating speed of the engine and, in turn, control the speed of the AV 602. The throttle and gear selector 648a may be configured to control the gear selection of the transmission. The brake unit 648b can include any combination of mechanisms configured to decelerate the AV 602. The brake unit 648b can slow the AV in a standard manner, including by using friction to slow the wheels or engine braking. The brake unit 648b may include an anti-lock brake system (ABS) that can prevent the brakes from locking up when the brakes are applied. The navigation unit 648c may be any system configured to determine a driving path or route for the AV 602. The navigation unit 648c may additionally be configured to update the driving path dynamically while the AV 602 is in operation. In some embodiments, the navigation unit 648c may be configured to incorporate data from the GPS transceiver 646g and one or more predetermined maps so as to determine the driving path (e.g., along the road 102 of FIG. 1) for the AV 602. The steering system 648d may represent any combination of mechanisms that may be operable to adjust the heading of AV 602 in an autonomous mode or in a driver-controlled mode.

The autonomous control unit 648e may represent a control system configured to identify, evaluate, and avoid or otherwise negotiate potential obstacles or obstructions in the environment of the AV 602. In general, the autonomous control unit 648e may be configured to control the AV 602 for operation without a driver or to provide driver assistance in controlling the AV 602. In some embodiments, the autonomous control unit 648e may be configured to incorporate data from the GPS transceiver 646g, the Radar unit 646b, the LiDAR unit 646f, the cameras 646a, and/or other vehicle subsystems to determine the driving path or trajectory for the AV 602.

The network communication subsystem 692 may comprise network interfaces, such as routers, switches, modems, and/or the like. The network communication subsystem 692 is configured to establish communication between the AV 602 and other systems including the oversight server 120 of FIG. 1. The network communication subsystem 692 is further configured to send and receive data from and to other systems. For example, the network communication subsystem 692 may be configured to receive batch commands 132 (see FIG. 1) from the oversight server 120 (see FIG. 1) and send sensor data 148 (see FIG. 1) to the oversight server 120 (see FIG. 1).

Many or all of the functions of the AV 602 can be controlled by the in-vehicle control computer 650. The in-vehicle control computer 650 may include at least one data processor 670 (which can include at least one microprocessor) that executes processing instructions 680 stored in a non-transitory computer-readable medium, such as the data storage device 690 or memory. The in-vehicle control computer 650 may also represent a plurality of computing devices that may serve to control individual components or subsystems of the AV 602 in a distributed fashion. In some embodiments, the data storage device 690 may contain processing instructions 680 (e.g., program logic) executable by the data processor 670 to perform various methods and/or functions of the AV 602, including those described with respect to FIGS. 1-8.

The data storage device 690 may contain additional instructions as well, including instructions to transmit data to, receive data from, interact with, or control one or more of the vehicle drive subsystem 642, the vehicle sensor subsystem 644, and the vehicle control subsystem 648. The in-vehicle control computer 650 can be configured to include a data processor 670 and a data storage device 690. The in-vehicle control computer 650 may control the function of the AV 602 based on inputs received from various vehicle subsystems (e.g., the vehicle drive subsystem 642, the vehicle sensor subsystem 644, and the vehicle control subsystem 648).

FIG. 7 shows an exemplary system 700 for providing precise autonomous driving operations. The system 700 includes several modules that can operate in the in-vehicle control computer 650, as described in FIG. 6. The in-vehicle control computer 650 includes a sensor fusion module 702 shown in the top left corner of FIG. 7, where the sensor fusion module 702 may perform at least four image or signal processing operations. The sensor fusion module 702 can obtain images from cameras located on an autonomous vehicle to perform image segmentation 704 to detect the presence of moving objects (e.g., other vehicles, pedestrians, etc.,) and/or static obstacles (e.g., stop sign, speed bump, terrain, etc.,) located around the autonomous vehicle. The sensor fusion module 702 can obtain LiDAR point cloud data item from LiDAR sensors located on the autonomous vehicle to perform LiDAR segmentation 706 to detect the presence of objects and/or obstacles located around the autonomous vehicle.

The sensor fusion module 702 can perform instance segmentation 708 on image and/or point cloud data items to identify an outline (e.g., boxes) around the objects and/or obstacles located around the autonomous vehicle. The sensor fusion module 702 can perform temporal fusion 710 where objects and/or obstacles from one image and/or one frame of point cloud data item are correlated with or associated with objects and/or obstacles from one or more images or frames subsequently received in time.

The sensor fusion module 702 can fuse the objects and/or obstacles from the images obtained from the camera and/or point cloud data item obtained from the LiDAR sensors. For example, the sensor fusion module 702 may determine based on a location of two cameras that an image from one of the cameras comprising one half of a vehicle located in front of the autonomous vehicle is the same as the vehicle located captured by another camera. The sensor fusion module 702 sends the fused object information to the interference module 746 and the fused obstacle information to the occupancy grid module 760. The in-vehicle control computer includes the occupancy grid module 760 which can retrieve landmarks from a map database 758 stored in the in-vehicle control computer. The occupancy grid module 760 can determine drivable areas and/or obstacles from the fused obstacles obtained from the sensor fusion module 702 and the landmarks stored in the map database 758. For example, the occupancy grid module 760 can determine that a drivable area may include a speed bump obstacle.

Below the sensor fusion module 702, the in-vehicle control computer 650 includes a LiDAR-based object detection module 712 that can perform object detection 716 based on point cloud data item obtained from the LiDAR sensors 714 located on the autonomous vehicle. The object detection 716 technique can provide a location (e.g., in 3D world coordinates) of objects from the point cloud data item. Below the LiDAR-based object detection module 712, the in-vehicle control computer includes an image-based object detection module 718 that can perform object detection 724 based on images obtained from cameras 720 located on the autonomous vehicle. The object detection 718 technique can employ a deep machine learning technique 724 to provide a location (e.g., in 3D world coordinates) of objects from the image provided by the camera 720.

The Radar 756 on the autonomous vehicle can scan an area in front of the autonomous vehicle or an area towards which the autonomous vehicle is driven. The Radar data is sent to the sensor fusion module 702 that can use the Radar data to correlate the objects and/or obstacles detected by the Radar 756 with the objects and/or obstacles detected from both the LiDAR point cloud data item and the camera image. The Radar data is also sent to the interference module 746 that can perform data processing on the Radar data to track objects by object tracking module 748 as further described below.

The in-vehicle control computer includes an interference module 746 that receives the locations of the objects from the point cloud and the objects from the image, and the fused objects from the sensor fusion module 702. The interference module 746 also receives the Radar data with which the interference module 746 can track objects by object tracking module 748 from one point cloud data item and one image obtained at one time instance to another (or the next) point cloud data item and another image obtained at another subsequent time instance.

The interference module 746 may perform object attribute estimation 750 to estimate one or more attributes of an object detected in an image or point cloud data item. The one or more attributes of the object may include a type of object (e.g., pedestrian, car, or truck, etc.). The interference module 746 may perform behavior prediction 752 to estimate or predict motion pattern of an object detected in an image and/or a point cloud. The behavior prediction 752 can be performed to detect a location of an object in a set of images received at different points in time (e.g., sequential images) or in a set of point cloud data item received at different points in time (e.g., sequential point cloud data items). In some embodiments, the behavior prediction 752 can be performed for each image received from a camera and/or each point cloud data item received from the LiDAR sensor. In some embodiments, the interference module 746 can be performed (e.g., run or executed) to reduce computational load by performing behavior prediction 752 on every other or after every pre-determined number of images received from a camera or point cloud data item received from the LiDAR sensor (e.g., after every two images or after every three point cloud data items).

The behavior prediction 752 feature may determine the speed and direction of the objects that surround the autonomous vehicle from the Radar data, where the speed and direction information can be used to predict or determine motion patterns of objects. A motion pattern may comprise a predicted trajectory information of an object over a pre-determined length of time in the future after an image is received from a camera. Based on the motion pattern predicted, the interference module 746 may assign motion pattern situational tags to the objects (e.g., "located at coordinates (x,y)," "stopped," "driving at 50mph," "speeding up" or "slowing down"). The situation tags can describe the motion pattern of the object. The interference module 746 sends the one or more object attributes (e.g., types of the objects) and motion pattern situational tags to the planning module 762. The interference module 746 may perform an environment analysis 754 using any information acquired by system 700 and any number and combination of its components.

The in-vehicle control computer includes the planning module 762 that receives the object attributes and motion pattern situational tags from the interference module 746, the drivable area and/or obstacles, and the vehicle location and pose information from the fused localization module 726 (further described below).

The planning module 762 can perform navigation planning 764 to determine a set of trajectories on which the autonomous vehicle can be driven. The set of trajectories can be determined based on the drivable area information, the one or more object attributes of objects, the motion pattern situational tags of the objects, location of the obstacles, and the drivable area information. In some embodiments, the navigation planning 764 may include determining an area next to the road where the autonomous vehicle can be safely parked in case of emergencies. The planning module 762 may include behavioral decision making 766 to determine driving actions (e.g., steering, braking, throttle) in response to determining changing conditions on the road (e.g., traffic light turned yellow, or the autonomous vehicle is in an unsafe driving condition because another vehicle drove in front of the autonomous vehicle and in a region within a pre-determined safe distance of the location of the autonomous vehicle). The planning module 762 performs trajectory generation 768 and selects a trajectory from the set of trajectories determined by the navigation planning operation 764. The selected trajectory information is sent by the planning module 762 to the control module 770.

The in-vehicle control computer includes a control module 770 that receives the proposed trajectory from the planning module 762 and the autonomous vehicle location and pose from the fused localization module 726. The control module 770 includes a system identifier 772. The control module 770 can perform a model-based trajectory refinement 774 to refine the proposed trajectory. For example, the control module 770 can applying a filtering (e.g., Kalman filter) to make the proposed trajectory data smooth and/or to minimize noise. The control module 770 may perform the robust control 776 by determining, based on the refined proposed trajectory information and current location and/or pose of the autonomous vehicle, an amount of brake pressure to apply, a steering angle, a throttle amount to control the speed of the vehicle, and/or a transmission gear. The control module 770 can send the determined brake pressure, steering angle, throttle amount, and/or transmission gear to one or more devices in the autonomous vehicle to control and facilitate precise driving operations of the autonomous vehicle.

The deep image-based object detection 724 performed by the image-based object detection module 718 can also be used detect landmarks (e.g., stop signs, speed bumps, etc.,) on the road (e.g., road 102 of FIG. 1). The in-vehicle control computer includes a fused localization module 726 that obtains landmarks detected from images, the landmarks obtained from a map database 736 stored on the in-vehicle control computer, the landmarks detected from the point cloud data item by the LiDAR-based object detection module 712, the speed and displacement from the odometer sensor 744 and the estimated location of the autonomous vehicle from the GPS/IMU sensor 738 (i.e., GPS sensor 740 and IMU sensor 742) located on or in the autonomous vehicle. Based on this information, the fused localization module 726 can perform a localization operation 728 to determine a location of the autonomous vehicle, which can be sent to the planning module 762 and the control module 770.

The fused localization module 726 can estimate pose 730 of the autonomous vehicle based on the GPS and/or IMU sensors 738. The pose of the autonomous vehicle can be sent to the planning module 762 and the control module 770. The fused localization module 726 can also estimate status (e.g., location, possible angle of movement) of the trailer unit based on (e.g., trailer status estimation 734), for example, the information provided by the IMU sensor 742 (e.g., angular rate and/or linear velocity). The fused localization module 726 may also check the map content 732.

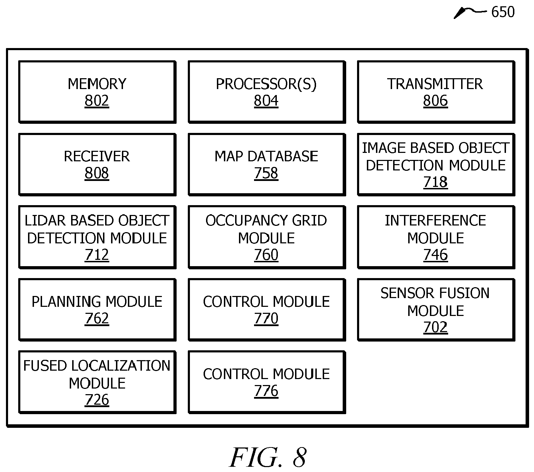

FIG. 8 shows an exemplary block diagram of an in-vehicle control computer 650 included in an autonomous AV 602. The in-vehicle control computer 650 includes at least one processor 804 and a memory 802 having instructions stored thereupon (e.g., software instructions 138 and processing instructions 680 in FIGS. 1 and 6, respectively). The instructions, upon execution by the processor 804, configure the in-vehicle control computer 650 and/or the various modules of the in-vehicle control computer 650 to perform the operations described in FIGS. 1-7. The transmitter 806 transmits or sends information or data to one or more devices in the autonomous vehicle. For example, the transmitter 806 can send an instruction to one or more motors of the steering wheel to steer the autonomous vehicle. The receiver 808 receives information or data transmitted or sent by one or more devices. For example, the receiver 808 receives a status of the current speed from the odometer sensor or the current transmission gear from the transmission. The transmitter 806 and receiver 808 are also configured to communicate with the plurality of vehicle subsystems 640 and the in-vehicle control computer 650 described above in FIGS. 6 and 7.

While several embodiments have been provided in this disclosure, it should be understood that the disclosed systems and methods might be embodied in many other specific forms without departing from the scope of this disclosure. The present examples are to be considered as illustrative and not restrictive, and the intention is not to be limited to the details given herein. For example, the various elements or components may be combined or integrated into another system or certain features may be omitted, or not implemented.

In addition, techniques, systems, subsystems, and methods described and illustrated in the various embodiments as discrete or separate may be combined or integrated with other systems, modules, techniques, or methods without departing from the scope of this disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and could be made without departing from the scope disclosed herein.

To aid the Patent Office, and any readers of any patent issued on this application in interpreting the claims appended hereto, applicants note that they do not intend any of the appended claims to invoke 35 U.S.C. § 112(f) as it exists on the date of filing hereof unless the words "means for" or "step for" are explicitly used in the particular claim.

Implementations of the disclosure can be described in view of the following clauses, the features of which can be combined in any reasonable manner.

Clause 1. A system for instructing an autonomous vehicle to perform a minimal risk condition maneuver, the system comprising:
a fleet comprising two or more autonomous vehicles; and
an oversight server configured to communicate with each autonomous vehicle of the fleet;
wherein each autonomous vehicle in the fleet comprises:
   vehicle sensor subsystems comprising:
      at least one sensor configured to provide vehicle health data; and
      a GPS unit to provide vehicle location data;
   vehicle drive subsystems;
   vehicle control subsystems; and
   an in-vehicle control computer comprising a network communications subsystem; and
wherein the oversight server is configured to:
   receive macro information that applies to a plurality of autonomous vehicles from among the fleet;
   generate a batch command based at least in part upon the macro information, wherein the batch command is associated with one or more conditions;
   for each autonomous vehicle from among the fleet:
      determine whether the autonomous vehicle meets the one or more conditions; and
      in response to determining that the autonomous vehicle meets the one or more conditions, send the batch command to the autonomous vehicle, wherein the batch command comprises instructions to perform a minimal risk condition maneuver.

Clause 2. The system of Clause 1, wherein the batch command further comprises instructions to provide the batch command to one or more other autonomous vehicles in the fleet.

Clause 3. The system of Clause 1, wherein the minimal risk condition maneuver comprises at least one of:
slowing the autonomous vehicle in a lane in which the autonomous vehicle is currently traveling;
causing the autonomous vehicle to pullover to an area on a side of a road on which the autonomous vehicle is currently traveling; and
causing the autonomous vehicle to exit a highway or roadway on which the autonomous vehicle is currently traveling and cease driving until receiving further instruction.

Clause 4. The system of Clause 1, wherein the oversight server is configured to accept the one or more conditions selected on an user interface.

Clause 5. The system of Clause 1, wherein the oversight server is further configured to:
accept the vehicle health data and the vehicle location data from each autonomous vehicle in the fleet; and
determine when an autonomous vehicle of the fleet has fulfilled the one or more conditions based on at least one of:
   the vehicle health data provided by each autonomous vehicle;
   the vehicle location data provided by each autonomous vehicle;
   weather data for an area in which each autonomous vehicle is traveling;
      and
   traffic data for the area in which each autonomous vehicle is traveling.

Clause 6. The system of Clause 1, wherein at least one autonomous vehicle of the fleet is configured to:
accept, via the in-vehicle control computer associated with the autonomous vehicle, the batch command from the oversight server; and
execute the batch command by utilizing sensor data and controls instructions gathered and generated by subsystems associated with the autonomous vehicle.

Clause 7. The system of Clause 2, wherein the autonomous vehicle is configured to send the batch command to the one or more other autonomous vehicles.

Clause 8. A method for instructing an autonomous vehicle to perform a minimal risk condition maneuver, the method comprising:
receiving macro information that applies to a plurality of autonomous vehicles from among a fleet of autonomous vehicles;
generating a batch command based at least in part upon the macro information, wherein the batch command is associated with one or more conditions;
for each autonomous vehicle from among the fleet:
   determining whether the autonomous vehicle meets the one or more conditions; and
   in response to determining that the autonomous vehicle meets the one or more conditions, sending the batch command to the autonomous vehicle, wherein the batch command comprises instructions to perform a minimal risk condition maneuver.

Clause 9. The method of Clause 8, wherein the macro information comprises at least one of:
weather data in a particular area in which the plurality of autonomous vehicles is traveling;
traffic data associated with the particular area;
a potential security vulnerability detected on a version of a software application installed on an in-vehicle control computer associated with the autonomous vehicle;
a change in government routing regulations associated with the particular area;
a defect in a component installed on the plurality of autonomous vehicles; and
a degradation in heath data associated with the plurality of autonomous vehicles.

Clause 10. The method of Clause 8, wherein the one or more conditions is time-zone based, such that the one or more conditions is scheduled to be verified for the autonomous vehicle at a specific time range.

Clause 11. The method of Clause 8, wherein the one or more conditions is location based, such that the one or more conditions is verified for the autonomous vehicle when the autonomous vehicle drives into a certain zone boundary.

Clause 12. The method of Clause 8, wherein the one or more conditions is immediate, such that an oversight server determines whether the autonomous vehicle meets the one or more conditions as the oversight server receives the macro information.

Clause 13. The method of Clause 8, wherein the one or more conditions comprise at least one of:
determining whether the autonomous vehicle is traveling on a certain type of road comprising a highway, an on/off ramp, a multi-lane road, a single-lane road, or a service road;
determining whether the autonomous vehicle is traveling on a particular direction on a road;
detecting whether a particular type of construction zone is within a threshold distance from the autonomous vehicle;
determining whether the autonomous vehicle is traveling on a section of a road designated by particular mile markers;
determining whether the autonomous vehicle is traveling in a geofence that indicates a zone boundary;
determining whether a distance between the autonomous vehicle and a specific location is a particular distance;
determining whether a software application version that is installed on the autonomous vehicle is a particular version;
determining whether the autonomous vehicle is traveling in a specific weather condition; and
determining whether the autonomous vehicle is traveling in a specific traffic condition.

Clause 14. The method of Clause 8, wherein the macro information is received from a third-party source comprising live news reporting, live traffic reporting, live weather reporting, or law enforcement.

Clause 15. A computer program comprising executable instructions stored in a non-transitory computer-readable medium that when executed by one or more processors causes the one or more processors to:
receive macro information that applies to a plurality of autonomous vehicles from among a fleet of autonomous vehicles;
generate a batch command based at least in part upon the macro information, wherein the batch command is associated with one or more conditions;
for each autonomous vehicle from among the fleet:
   determine whether the autonomous vehicle meets the one or more conditions; and
in response to determining that the autonomous vehicle meets the one or more conditions, send the batch command to the autonomous vehicle, wherein the batch command comprises instructions to perform a minimal risk condition maneuver.

Clause 16. The computer program of Clause 15, wherein:
at least one condition of the one or more conditions is detected by the autonomous vehicle, and;
the at least one condition comprises:
   determining whether a fault code that potentially degrades health of the autonomous vehicle is detected, and
   determining whether a defect in a physical component installed in the autonomous vehicle is detected.

Clause 17. The computer program of Clause 15, wherein the instructions when executed by the one or more processors, further cause the one or more processors to receive a confirmation message from the autonomous vehicle that the autonomous vehicle performed the minimal risk condition maneuver.

Clause 18. The computer program of Clause 15, wherein the instructions when executed by the one or more processors, further cause the one or more processors to:
detect, based at least in part upon sensor data, an object on a road traveled by the autonomous vehicle;
determine whether the object prevents performing the minimal risk condition maneuver at a first timestamp;
in response to determining that the object prevents performing the minimal risk condition maneuver at the first timestamp:
   continue driving until the autonomous vehicle passes the object; and
   perform the minimal risk condition maneuver at a second timestamp.

Clause 19. The computer program of Clause 15, wherein autonomous vehicle comprises at least one sensor, the at least one sensor comprises a camera, a Light Detection and Ranging (LiDAR) sensor, a motion sensor, or an infrared sensor.

Clause 20. The computer program of Clause 15, wherein the autonomous vehicle is a tractor unit that is attached to a trailer.

## Claims

1. A method for instructing an autonomous vehicle to perform a minimal risk condition maneuver, the method comprising:
receiving macro information that applies to a plurality of autonomous vehicles from among a fleet of autonomous vehicles;
generating a batch command based at least in part upon the macro information, wherein the batch command is associated with one or more conditions;
for each autonomous vehicle from among the fleet:
determining whether the autonomous vehicle meets the one or more conditions; and
in response to determining that the autonomous vehicle meets the one or more conditions, sending the batch command to the autonomous vehicle, wherein the batch command comprises instructions to perform a minimal risk condition maneuver.

2. The method of Claim 1, wherein the macro information comprises at least one of:
weather data in a particular area in which the plurality of autonomous vehicles is traveling;
traffic data associated with the particular area;
a potential security vulnerability detected on a version of a software application installed on an in-vehicle control computer associated with the autonomous vehicle;
a change in government routing regulations associated with the particular area;
a defect in a component installed on the plurality of autonomous vehicles; and
a degradation in heath data associated with the plurality of autonomous vehicles.

3. The method of Claim 1, wherein the one or more conditions is time-zone based, such that the one or more conditions is scheduled to be verified for the autonomous vehicle at a specific time range.

4. The method of Claim 1, wherein the one or more conditions is location based, such that the one or more conditions is verified for the autonomous vehicle when the autonomous vehicle drives into a certain zone boundary.

5. The method of Claim 1, wherein the one or more conditions is immediate, such that an oversight server determines whether the autonomous vehicle meets the one or more conditions as the oversight server receives the macro information.

6. The method of Claim 1, wherein the one or more conditions comprise at least one of:
determining whether the autonomous vehicle is traveling on a certain type of road comprising a highway, an on/off ramp, a multi-lane road, a single-lane road, or a service road;
determining whether the autonomous vehicle is traveling on a particular direction on a road;
detecting whether a particular type of construction zone is within a threshold distance from the autonomous vehicle;
determining whether the autonomous vehicle is traveling on a section of a road designated by particular mile markers;
determining whether the autonomous vehicle is traveling in a geofence that indicates a zone boundary;
determining whether a distance between the autonomous vehicle and a specific location is a particular distance;
determining whether a software application version that is installed on the autonomous vehicle is a particular version;
determining whether the autonomous vehicle is traveling in a specific weather condition; and
determining whether the autonomous vehicle is traveling in a specific traffic condition.

7. The method of Claim 1, wherein the macro information is received from a third-party source comprising live news reporting, live traffic reporting, live weather reporting, or law enforcement.

8. A computer program including instructions for performing the method according to the claims 1-7 when run on a data processing system.

9. A non-transitory computer-readable medium including the computer program of claim 8.

10. A system for instructing an autonomous vehicle to perform a minimal risk condition maneuver, the system comprising:
a fleet comprising two or more autonomous vehicles; and
an oversight server configured to communicate with each autonomous vehicle of the fleet;
wherein each autonomous vehicle in the fleet comprises:
vehicle sensor subsystems comprising:
at least one sensor configured to provide vehicle health data; and
a GPS unit to provide vehicle location data;
vehicle drive subsystems;
vehicle control subsystems; and
an in-vehicle control computer comprising a network communications subsystem; and
wherein the oversight server is configured to:
receive macro information that applies to a plurality of autonomous vehicles from among the fleet;
generate a batch command based at least in part upon the macro information, wherein the batch command is associated with one or more conditions;
for each autonomous vehicle from among the fleet:
determine whether the autonomous vehicle meets the one or more conditions; and
in response to determining that the autonomous vehicle meets the one or more conditions, send the batch command to the autonomous vehicle, wherein the batch command comprises instructions to perform a minimal risk condition maneuver.

11. The system of Claim 10, wherein the batch command further comprises instructions to provide the batch command to one or more other autonomous vehicles in the fleet, and optionally wherein the autonomous vehicle is configured to send the batch command to the one or more other autonomous vehicles.

12. The system of Claim 10, wherein the minimal risk condition maneuver comprises at least one of:
slowing the autonomous vehicle in a lane in which the autonomous vehicle is currently traveling;
causing the autonomous vehicle to pullover to an area on a side of a road on which the autonomous vehicle is currently traveling; and
causing the autonomous vehicle to exit a highway or roadway on which the autonomous vehicle is currently traveling and cease driving until receiving further instruction.

13. The system of Claim 10, wherein the oversight server is configured to accept the one or more conditions selected on an user interface.

14. The system of Claim 10, wherein the oversight server is further configured to:
accept the vehicle health data and the vehicle location data from each autonomous vehicle in the fleet; and
determine when an autonomous vehicle of the fleet has fulfilled the one or more conditions based on at least one of:
the vehicle health data provided by each autonomous vehicle;
the vehicle location data provided by each autonomous vehicle;
weather data for an area in which each autonomous vehicle is traveling; and
traffic data for the area in which each autonomous vehicle is traveling.

15. The system of Claim 10, wherein at least one autonomous vehicle of the fleet is configured to:
accept, via the in-vehicle control computer associated with the autonomous vehicle, the batch command from the oversight server; and
execute the batch command by utilizing sensor data and controls instructions gathered and generated by subsystems associated with the autonomous vehicle.
